(19)

**Europäisches Patentamt**
**European Patent Office**
**Office européen des brevets**

(11) **EP 4 019 666 A1**

(12) **EUROPÄISCHE PATENTANMELDUNG**

(43) Veröffentlichungstag:
    **29.06.2022 Patentblatt 2022/26**

(21) Anmeldenummer: **20217035.3**

(22) Anmeldetag: **23.12.2020**

(51) Internationale Patentklassifikation (IPC):
    **C25B 1/04** *(2021.01)*    **C25B 9/23** *(2021.01)*
    **C25B 11/054** *(2021.01)*    **C25B 11/067** *(2021.01)*
    **C25B 11/091** *(2021.01)*

(52) Gemeinsame Patentklassifikation (CPC):
    **C25B 1/04; C25B 9/23; C25B 11/054;**
    **C25B 11/067; C25B 11/091**

(84) Benannte Vertragsstaaten:
    **AL AT BE BG CH CY CZ DE DK EE ES FI FR GB**
    **GR HR HU IE IS IT LI LT LU LV MC MK MT NL NO**
    **PL PT RO RS SE SI SK SM TR**
    Benannte Erstreckungsstaaten:
    **BA ME**
    Benannte Validierungsstaaten:
    **KH MA MD TN**

(71) Anmelder:
    • **Heraeus Deutschland GmbH & Co. KG**
      **63450 Hanau (DE)**
    • **Technische Universität München**
      **80333 München (DE)**

(72) Erfinder:
    • **GEBAUER, Christian**
      **63450 Hanau (DE)**
    • **KEMMER, Martina**
      **63450 Hanau (DE)**

    • **GASTEIGER, Hubert**
      **80469 München (DE)**
    • **BERNT, Maximilian**
      **80807 München (DE)**
    • **HARTIG-WEISS, Alexandra**
      **91560 Heilsbronn (DE)**
    • **BYRKNES, Jan**
      **61118 Bad Vilbel (DE)**
    • **EICKES, Christian**
      **60431 Frankfurt am Main (DE)**
    • **GHIELMI, Alessandro**
      **60322 Frankfurt am Main (DE)**

(74) Vertreter: **Maiwald Patent- und**
    **Rechtsanwaltsgesellschaft mbH**
    **Elisenhof**
    **Elisenstraße 3**
    **80335 München (DE)**

(54) **IRIDIUMHALTIGER KATALYSATOR FÜR DIE WASSERELEKTROLYSE**

(57) Die vorliegende Erfindung betrifft einen partikelförmigen Katalysator, enthaltend
- ein Trägermaterial,
- eine auf dem Trägermaterial vorliegende iridiumhaltige Beschichtung, die ein Iridiumoxid, ein Iridiumhydroxid oder ein Iridiumhydroxidoxid enthält und eine durchschnittliche Schichtdicke im Bereich von 1,5 nm bis 5,0 nm aufweist,
wobei der Katalysator Iridium in einer Menge von maximal 50 Gew% enthält.

Figur 1

EP 4 019 666 A1

**Beschreibung**

Die vorliegende Erfindung betrifft einen iridiumhaltigen Katalysator für die Sauerstoffentwicklungsreaktion bei der Wasserelektrolyse.

Wasserstoff wird als Energieträger der Zukunft angesehen, da er eine nachhaltige Energiespeicherung ermöglicht, langfristig verfügbar ist und auch mit regenerativen Energietechnologien herstellbar ist.

Derzeit ist die Dampfreformierung das gebräuchlichste Verfahren zur Herstellung von Wasserstoff. Bei der Dampfreformierung werden Methan und Wasserdampf zu Wasserstoff und CO umgesetzt. Die Wasserelektrolyse stellt eine weitere Variante der Wasserstoffherstellung dar. Über die Wasserelektrolyse kann Wasserstoff in hoher Reinheit erhalten werden.

Es gibt verschiedene Methoden der Wasserelektrolyse, insbesondere eine alkalische Wasserelektrolyse, eine saure Wasserelektrolyse unter Verwendung einer Polymerelektrolytmembran ("*PEM*"; PEM-Wasserelektrolyse) und eine Hochtemperatur-Feststoffoxid-Elektrolyse.

Eine Wasserelektrolysezelle enthält eine Halbzelle mit einer Elektrode, an der die Sauerstoffentwicklungsreaktion (englisch: *"oxygen evolution reaction", "OER"*) stattfindet, sowie eine weitere Halbzelle mit einer Elektrode, an der die Wasserstoffentwicklungsreaktion (englisch: *"hydrogen evolution reaction" "HER"*) stattfindet. Die Elektrode, an der die Sauerstoffentwicklungsreaktion stattfindet, wird als Anode bezeichnet.

Eine Übersicht zur Technologie der Wasserelektrolyse, insbesondere der PEM-Wasserelektrolyse, findet sich beispielsweise bei M. Carmo et al., International Journal of Hydrogen Energy, 38, 2013, S. 4901-4934; und V. Himabindu et al., Materials Science for Energy Technologies, 2, 2019, S. 442-454.

Bei einer Polymerelektrolytmembran-Wasserelektrolysezelle (nachfolgend auch als PEM-Wasserelektrolysezelle bezeichnet) fungiert die Polymermembran als Protonentransportmedium und isoliert die Elektroden elektrisch voneinander. Die Katalysatorzusammensetzungen für die Sauerstoffentwicklungsreaktion und die Wasserstoffentwicklungsreaktion werden beispielsweise als Anode und Kathode auf Vorder- und Rückseite der Membran aufgebracht (engl.: "*Catalyst-Coated Membrane CCM*"), so dass eine Membran-Elektroden-Einheit erhalten wird (engl.: *"Membrane Electrode Assembly MEA"*).

Die an der Anode einer PEM-Wasserelektrolysezelle ablaufende Sauerstoffentwicklungsreaktion lässt sich durch folgende Reaktionsgleichung wiedergeben:

$$2\,H_2O \rightarrow 4\,H^+ + O_2 + 4\,e^-$$

Aufgrund ihres komplexen Reaktionsmechanismus weist die Sauerstoffentwicklungsreaktion eine langsame Reaktionskinetik auf, weshalb ein signifikantes Überpotential an der Anode benötigt wird, um ausreichend hohe Umsatzraten zu erzielen. Außerdem läuft die Sauerstoffentwicklungsreaktion unter sehr sauren Bedingungen (d.h. niedrigem pH-Wert) ab.

Der effiziente Betrieb einer Wasserelektrolysezelle erfordert die Anwesenheit von Katalysatoren. Da die Sauerstoffentwicklungsreaktion an der Anode unter sehr korrosiven Bedingungen abläuft (niedriger pH-Wert, signifikante Überspannung), kommen als geeignete Katalysatormaterialien insbesondere Edelmetalle wie Ruthenium und Iridium und deren Oxide in Frage.

Die katalytisch wirksamen Metalle oder Metalloxide können optional auf einem Trägermaterial vorliegen, um so die spezifische Oberfläche des Katalysatormaterials zu erhöhen.

Auch bei den Trägermaterialien kommen nur solche Materialien in Frage, die unter den sehr korrosiven Bedingungen der Sauerstoffentwicklungsreaktion eine ausreichend hohe Stabilität aufweisen, beispielsweise Übergangsmetalloxide wie $TiO_2$ oder Oxide bestimmter Hauptgruppenelemente wie z.B. $Al_2O_3$. Viele dieser oxidischen Trägermaterialien sind jedoch elektrisch nicht leitend, was sich nachteilig auf die Effizienz der Sauerstoffentwicklungsreaktion und damit auch der Wasserelektrolyse auswirkt.

Eine Übersicht zu Katalysatoren für die Sauerstoffentwicklungsreaktion unter sauren Bedingungen (d.h. an der Anode einer PEM-Wasserelektrolysezelle) findet sich beispielsweise bei P. Strasser et al., Adv. Energy Mater., 7, 2017, 1601275; und F.M. Sapountzi et al., Progress in Energy and Combustion Science, 58, 2017, S. 1-35.

WO 2005/049199 A1 beschreibt eine Katalysatorzusammensetzung für die Sauerstoffentwicklungsreaktion bei der PEM-Wasserelektrolyse. Dieser Katalysator enthält Iridiumoxid und ein als Trägermaterial fungierendes anorganisches Oxid. Das Trägermaterial weist eine BET-Oberfläche im Bereich von 50 m²/g bis 400 m²/g auf und liegt in der Zusammensetzung in einer Menge von weniger als 20 Gew% vor. Somit weist die Katalysatorzusammensetzung einen hohen Iridiumgehalt auf.

Die Vorkommen an Iridium sind recht begrenzt. In den Publikationen von M. Bernt et al., "Analysis of Voltage Losses in PEM Water Electrolyzers with Low Platinum Group Metal Loadings", J. Electrochem. Soc. 165, 2018, F305-F314, und M. Bernt et al., "Current Challenges in Catalyst Development for PEM Water Electrolyzers", Chem. Ing. Tech., 2020, 92, Nr. 1-2, S. 31-39, wird erwähnt, dass ein derzeit üblicher Beladungsgrad an Iridium auf der Anodenseite der katalysatorbeschichteten Membran etwa 2 mg Iridium pro cm$^2$ beschichteter Membranfläche beträgt, dieser Beladungsgrad aber noch sehr deutlich reduziert werden muss, um einen großskaligen Einsatz der PEM-Elektrolyse auf Basis der verfügbaren Iridiummenge zu ermöglichen.

M. Bernt et al., J. Electrochem. Soc. 165, 2018, F305-F314, beschreiben die Herstellung katalysatorbeschichteter Membrane unter Verwendung einer kommerziell erhältlichen Katalysatorzusammensetzung, die ein auf TiO$_2$ geträgertes IrO$_2$ enthält. Die Katalysatorzusammensetzung enthält Iridium (in Form von IrO$_2$) in einer Menge von 75 Gew%. Um eine Anode, die einen möglichst geringen flächenbezogenen Iridium-Beladungsgrad aufweist, zu erhalten, wurde die Schichtdicke der Anode reduziert. Es wurden flächenbezogene Iridium-Beladungsgrade im Bereich von 0,20-5,41 mg Iridium/cm$^2$ Membran realisiert und hinsichtlich ihrer Effizienz bei der Wasserelektrolyse getestet. Während bei Beladungsgraden von 1-2 mg Iridium/cm$^2$ Membran noch gute Ergebnisse erhalten wurden, führten Beladungsgrade von weniger als 0,5 mg Iridium/cm$^2$ Membran aufgrund der geringen Schichtdicke der Anode und der daraus resultierenden inhomogen Elektrodenschicht zu einer signifikanten Verschlechterung der Effizienz der Wasserelektrolyse. Es wird in dieser Publikation daher vorgeschlagen, die Struktur oder Morphologie der Katalysatorzusammensetzung so zu ändern, dass sich in der Anodenschicht eine geringere Iridium-Packungsdichte ergibt und sich auf diese Weise bei gleich bleibender Schichtdicke der Anode (z.B. 4-8 μm) reduzierte Iridium-Beladungsgrade von weniger als 0,5 mg Iridium/cm$^2$ beschichteter Membranfläche realisieren lassen.

M. Bernt et al., Chem. Ing. Tech., 2020, 92, Nr. 1-2, S. 31-39, erwähnen, dass ein möglicher Ansatz für eine geringere Iridium-Packungsdichte in der Anode darin besteht, ein Trägermaterial hoher spezifischer Oberfläche (d.h. hoher BET-Oberfläche) zu verwenden und das katalytisch aktive metallische Iridium oder das Iridiumoxid möglichst fein auf diesem Trägermaterial zu dispergieren. In diesem Zusammenhang wird in der Publikation erwähnt, dass viele der üblichen Trägermaterialien ausreichend hoher Stabilität wie z.B. TiO$_2$ elektrisch nicht leitfähig sind und daher eine relativ große Menge an Ir oder IrO$_2$ (> 40 Gew%) in der Katalysatorzusammensetzung benötigt wird, um ein möglichst zusammenhängendes Netzwerk an Ir- oder IrO$_2$-Nanopartikeln auf der Oberfläche des elektrisch nicht leitfähigen Trägermaterials zu generieren. In der Publikation wird als möglicher Lösungsansatz auch beschrieben, dass das Iridiumoxid auf einem elektrisch leitfähigen Trägermaterial, beispielsweise einem Antimon-dotierten Zinnoxid dispergiert werden kann.

EP 2 608 297 A1 beschreibt eine Katalysatorzusammensetzung für die Wasserelektrolyse, die ein als Trägermaterial fungierendes anorganisches Oxid und ein auf diesem Trägermaterial dispergiertes Iridiumoxid enthält. Das oxidische Trägermaterial liegt in der Zusammensetzung in einer Menge von 25-70 Gew% vor und weist eine BET-Oberfläche im Bereich von 30-200 m$^2$/g auf.

C. Van Pham et al., Applied Catalysis B: Environmental, 269, 2020, 118762, beschreiben einen Katalysator für die Sauerstoffentwicklungsreaktion der Wasserelektrolyse, der eine Kern-Schale-Struktur aufweist, wobei TiO$_2$ den Kern und IrO$_2$ die Schale bilden. Die Kern-Schale-Partikel enthalten 50 Gew% IrO$_2$. Über Röntgenbeugung und die Scherrer-Gleichung wird für die IrO$_2$-Schale eine mittlere Kristallitgröße von 10 nm bestimmt. Es werden katalysatorbeschichtete Membrane hergestellt, deren Anode einen flächenbezogenen Iridium-Beladungsgrad von 1,2 mg Iridium/cm$^2$ Membran bzw. 0,4 mg Iridium/cm$^2$ Membran aufweist. EP 2 608 298 A1 beschreibt einen Katalysator, der (i) ein Trägermaterial mit Kern-Schale-Struktur und (ii) metallische Nanopartikel, die auf diesem Kern-Schale-Träger dispergiert sind, enthält. Die Katalysatorzusammensetzung wird für Brennstoffzellen verwendet.

Eine Aufgabe der vorliegenden Erfindung ist die Bereitstellung eines Katalysators für die Sauerstoffentwicklungsreaktion in der sauren Wasserelektrolyse ("PEM-Wasserelektrolyse"), mit der sich eine Anode in einer Membranelektrodeneinheit herstellen lässt, die eine möglichst geringe flächenbezogene Iridium-Beladung (d.h. möglichst geringe Menge an Iridium pro cm$^2$ Membran) bei weiterhin hoher Aktivität hinsichtlich der Sauerstoffentwicklungsreaktion aufweist.

Gemäß eines ersten Aspekts der vorliegenden Erfindung wird die Aufgabe gelöst durch einen partikelförmigen Katalysator, enthaltend

- ein Trägermaterial,
- eine auf dem Trägermaterial vorliegende iridiumhaltige Beschichtung, die ein Iridiumoxid, ein Iridiumhydroxid oder ein Iridiumhydroxidoxid oder ein Gemisch aus mindestens zwei dieser Iridiumverbindungen enthält und eine durchschnittliche Schichtdicke im Bereich von 1,5 nm bis 5,0 nm aufweist,

wobei der Katalysator einen Iridiumgehalt von maximal 50 Gew% aufweist.

Der erfindungsgemäße Katalysator enthält eine relativ geringe Menge (maximal 50 Gew%) an Iridium, das als Iridiumoxid, Iridiumhydroxid oder Iridiumhydroxidoxid in Form einer Beschichtung auf dem partikelförmigen Trägermaterial vorliegt. Im Rahmen des ersten Aspekts der vorliegenden Erfindung wurde erkannt, dass bei einer durchschnittlichen Schichtdicke dieser iridiumhaltigen Beschichtung auf den Partikeln des Trägermaterials im Bereich von 1,5 nm bis 5,0 nm ein Katalysator erhalten wird, aus dem sich eine Anode fertigen lässt, die eine sehr geringe flächenbezogene Iridium-Beladung (z.B. weniger als 0,4 mg Iridium pro cm$^2$) bei weiterhin hoher Aktivität hinsichtlich der Sauerstoffentwicklungsreaktion aufweist. Die Schichtdicke kann durch die Menge an Iridiumoxid, Iridiumhydroxid oder Iridiumhydroxidoxid, die auf dem Trägermaterial abgeschieden wird, und die BET-Oberfläche des Trägermaterials eingestellt werden. Je höher die BET-Oberfläche des Trägermaterials bei einer bestimmten Menge an aufgebrachtem Iridiumoxid, Iridiumhydroxid oder Iridiumhydroxidoxid ist, desto geringer wird die Schichtdicke der iridiumhaltigen Beschichtung.

Bevorzugt weist die iridiumhaltige Beschichtung eine relativ gleichmäßige Schichtdicke auf. Beispielsweise variiert die durchschnittliche Schichtdicke lokal um einen Faktor von maximal 2. Bevorzugt beträgt die relative Standardabweichung von der durchschnittlichen Schichtdicke maximal 35%. Wie allgemein bekannt ist, ergibt sich die relative Standardabweichung $StAbw_{rel}$ (in %), manchmal auch als Variationskoeffizient bezeichnet, aus folgender Beziehung:

$$StAbw_{rel} = [StAbw / MW] \times 100$$

wobei

MW der Mittelwert der gemessenen Größe, vorliegend also die durchschnittliche Schichtdicke in nm, und StAbw die Standardabweichung, in nm, von der durchschnittlichen Schichtdicke sind.

Die (absolute) Standardabweichung ergibt sich in bekannter Weise über die Quadratwurzel der Varianz.

Gemäß eines zweiten Aspekts der vorliegenden Erfindung wird die Aufgabe gelöst durch einen partikelförmigen Katalysator, enthaltend

- ein Trägermaterial,
- eine auf dem Trägermaterial vorliegende iridiumhaltige Beschichtung, die ein Iridiumoxid, ein Iridiumhydroxid oder ein Iridiumhydroxidoxid enthält,

wobei das Trägermaterial eine BET-Oberfläche im Bereich von 2 $m^2$/g bis 50 $m^2$/g aufweist und der Iridiumgehalt des Katalysators der folgenden Bedingung genügt:

$$(1,505 \ (g/m^2) \times BET) / (1 + 0,0176 \ (g/m^2) \times BET) \leq Ir\text{-}G \leq (4,012 \ (g/m^2) \times BET) / (1 + 0,0468 \ (g/m^2) \times BET)$$

wobei

BET die BET-Oberfläche, in $m^2$/g, des Trägermaterials ist und Ir-G der Iridiumgehalt, in Gew%, des Katalysators ist.

Die Verwendung eines Trägermaterials mit relativ geringer BET-Oberfläche (maximal 50 $m^2$/g) ermöglicht es, den Iridiumgehalt des Katalysators zu reduzieren. Im Rahmen der vorliegenden Erfindung wurde überraschend erkannt, dass sich ein verbesserter Kompromiss zwischen möglichst niedrigem Iridiumgehalt und möglichst hoher Aktivität hinsichtlich der Sauerstoffentwicklungsreaktion realisieren lässt, wenn der Iridiumgehalt des Katalysators so auf die BET-Oberfläche des Trägermaterials abgestimmt ist, dass die oben genannte Bedingung erfüllt ist. Wird beispielsweise ein Trägermaterial mit einer BET-Oberfläche von 10 $m^2$/g verwendet, ergibt sich anhand der oben genannten Bedingung, dass für den Katalysator ein Iridiumgehalt im Bereich von 13-27 Gew% zu wählen ist.

Sofern nichts Gegenteiliges angemerkt ist, gelten die nachfolgenden Ausführungen sowohl für den Katalysator gemäß dem ersten Aspekt als auch für den Katalysator gemäß dem zweiten Aspekt der vorliegenden Erfindung.

Bevorzugt enthält der Katalysator kein metallisches Iridium (d.h. Iridium in der Oxidationsstufe 0). Bevorzugt liegt das Iridium ausschließlich als Iridium in der Oxidationsstufe +3 (Iridium(III)) und/oder als Iridium in der Oxidationsstufe +4 (Iridium(IV)) vor. Die Oxidationsstufe des Iridiums und somit die Abwesenheit von Iridium(0) und die Anwesenheit von Iridium(III) und/oder Iridium(IV) lässt sich durch XPS (Röntgenphotoelektronenspektroskopie) verifizieren.

Bevorzugt enthält der Katalysator Iridium in einer Menge von maximal 40 Gew%, bevorzugter maximal 35 Gew%. Beispielsweise enthält der Katalysator Iridium in einer Menge von 5 Gew% bis 40 Gew%, bevorzugter 5 Gew% bis 35 Gew%.

Bevorzugt weist die iridiumhaltigen Beschichtung eine durchschnittliche Dicke im Bereich von 1,5 nm bis 4,0 nm, bevorzugter 1,7 nm bis 3,5 nm auf.

In einer beispielhaften Ausführungsform weist die iridiumhaltigen Beschichtung eine durchschnittliche Dicke im Bereich von 1,7 nm bis 3,5 nm und der Iridiumgehalt des Katalysators beträgt maximal 40 Gew%.

Bevorzugt beträgt die BET-Oberfläche des Trägermaterials 2 $m^2$/g bis 40 $m^2$/g, bevorzugter 2 $m^2$/g bis <10 $m^2$/g, noch bevorzugter 2 $m^2$/g bis 9 $m^2$/g.

In einer bevorzugten Ausführungsform genügt der Iridiumgehalt des Katalysators der folgenden Bedingung:

$$(1{,}705 \ (g/m^2) \ x \ BET) \ / \ (1 + 0{,}0199 \ (g/m^2) \ x \ BET) \leq Ir\text{-}G \leq (3{,}511 \ (g/m^2) \ x \ BET) \ / \ (1 + 0{,}0410 \ (g/m^2) \ x \ BET)$$

wobei

BET die BET-Oberfläche in $m^2/g$ des Trägermaterials ist und
Ir-G der Iridiumgehalt in Gew% des Katalysators ist.

Noch bevorzugter genügt der Iridiumgehalt des Katalysators der folgenden Bedingung:

$$(1{,}805 \ (g/m^2) \ x \ BET) \ / \ (1 + 0{,}0211 \ (g/m^2) \ x \ BET) \leq Ir\text{-}G \leq (3{,}009 \ (g/m^2) \ x \ BET) \ / \ (1 + 0{,}0351 \ (g/m^2) \ x \ BET)$$

wobei

BET die BET-Oberfläche in $m^2/g$ des Trägermaterials ist und
Ir-G der Iridiumgehalt in Gew% des Katalysators ist.

Bevorzugt enthält die iridiumhaltige Beschichtung ein Iridiumhydroxidoxid. Ein Iridiumhydroxidoxid enthält neben Oxid-Anionen auch noch Hydroxid-Anionen und lässt sich beispielsweise durch folgende Formel wiedergeben: $IrO(OH)x$; $1 \leq x < 2$.

Beispielsweise liegt in der iridiumhaltigen Beschichtung ein atomares Verhältnis von Iridium(IV) zu Iridium (III), bestimmt über Röntgenphotoelektronenspektroskopie (XPS), von maximal 4,7/1,0 vor. Beispielsweise liegt das atomare Iridium(IV)/Iridium(III)-Verhältnis in der iridiumhaltigen Schicht im Bereich von 1,0/1,0 bis 4,7/1,0. Dies kann zu einer weiteren Verbesserung der elektrochemischen Aktivität des Katalysators führen. Um einen vorteilhaften Kompromiss zwischen hoher elektrochemischer Aktivität und hoher elektrischer Leitfähigkeit zu realisieren, kann es bevorzugt sein, dass das atomare Iridium(IV)/Iridium(III)-Verhältnis in der iridiumhaltigen Schicht im Bereich von 1,9/1,0 bis 4,7/1,0, bevorzugter 2,5/1,0 bis 4,7/1,0 liegt. Das atomare Iridium(IV)/Iridium(III)-Verhältnis kann über die Temperatur einer thermischen Behandlung des Katalysators eingestellt werden. Eine thermische Behandlung des Katalysators bei hoher Temperatur begünstigt hohe Werte für das Iridium(IV)/Iridium(III)-Verhältnis. Bevorzugte Temperaturen für eine thermische Behandlung des Katalysators werden nachfolgend noch angegeben.

Bevorzugt enthält der Katalysator kein metallisches Edelmetall (wie z.B. Platin, Palladium, Iridium, Rhodium, Ruthenium, Osmium, Silber oder Gold). Mit metallischem Edelmetall ist ein Edelmetall der Oxidationsstufe 0 gemeint. Die Abwesenheit metallischer Edelmetalle kann durch XPS verifiziert werden.

Optional kann die iridiumhaltige Beschichtung noch Ruthenium in der Oxidationsstufe +3 (Ru(III)) und/oder der Oxidationsstufe +4 (Ru(IV)) enthalten.

Geeignete Trägermaterialien, auf denen die iridiumhaltige Beschichtung aufgebracht werden kann, sind dem Fachmann bekannt. Beispielsweise ist das Trägermaterial ein Oxid eines Übergangsmetalls (beispielsweise ein Titanoxid (z.B. $TiO_2$), ein Zirkonoxid (z.B. $ZrO_2$), ein Nioboxid (z.B. $Nb_2O_5$), ein Tantaloxid (z.B. $Ta_2O_5$) oder ein Ceroxid), ein Oxid eines Hauptgruppenmetalls (z.B. ein Aluminiumoxid wie $Al_2O_3$), $SiO_2$ oder ein Gemisch aus zwei oder mehr der vorstehend genannten Trägermaterialien. In einer bevorzugten Ausführungsform ist das Trägermaterial ein Titanoxid.

Bei dem Trägermaterial handelt es sich üblicherweise um ein partikelförmiges Trägermaterial.

Für die elektrochemische Aktivität des Katalysators kann es vorteilhaft sein, wenn eine längere thermische Behandlung bei hoher Temperatur vermieden wird. Erfolgt also die Trocknung des beladenen Trägermaterials bei moderater Temperatur und wird auf eine anschließende Kalzinierung des Materials bei hoher Temperatur verzichtet oder zumindest die Zeitdauer der thermischen Behandlung bei höherer Temperatur relativ kurz gehalten, so zeigt dieses Material eine hohe katalytische Aktivität bei der Sauerstoffentwicklungsreaktion unter sauren Bedingungen.

Beispielsweise wird der Katalysator während seiner Herstellung keiner thermischen Behandlung bei einer Temperatur von mehr als 250°C über eine Zeitdauer von mehr als 1 Stunde unterzogen.

Beispielsweise wird der Katalysator während seiner Herstellung bei einer Temperatur von maximal 250°C, bevorzugter maximal 200°C getrocknet und nach dem Trocknen keiner weiteren thermischen Behandlung unterzogen.

Wenn der Katalysator während seiner Herstellung keiner thermischen Nachbehandlung unterzogen wird, kann dies dazu führen, dass der Katalysator eine eher niedrige elektrische Leitfähigkeit aufweist. In der Anode einer Wasserelektrolysezelle kann die auf der Membran vorliegende katalysatorhaltigen Beschichtung beispielsweise an eine poröse Transportschicht ("*porous transport layer*" PTL) angrenzen. Poröse Transportschichten sind beispielsweise aus Titan gefertigt, wobei sich eine dünne Oxidschicht auf dem Metall ausbilden kann. Wenn der Katalysator eine eher niedrige elektrische Leitfähigkeit aufweist, kann dies an der Grenzfläche zwischen der katalysatorhaltigen Beschichtung und der porösen Transportschicht zu einer unerwünschten Erhöhung des Kontaktwiderstands führen und so die Effizienz der Wasserelektrolysezelle nachteilig beeinflussen. Der Kontaktwiderstand zwischen der katalysatorhaltigen Beschichtung und der aus Titan gefertigten porösen Transportschicht lässt sich reduzieren, wenn auf der porösen Transportschicht beispielsweise ein Edelmetall (z.B. Platin) aufgebracht wird, so dass die katalysatorhaltige Beschichtung an diese metallische Platinschicht angrenzt.

Um die elektrische Leitfähigkeit des Katalysators zu verbessern und so gegebenenfalls das Aufbringen einer Edelmetallschicht auf der porösen Transportschicht in der Wasserelektrolysezelle zu vermeiden, kann es vorteilhaft sein, wenn der Katalysator während seiner Herstellung einer thermischen Nachbehandlung bei etwas höherer Temperatur unterzogen wurde.

Ein vorteilhafter Kompromiss zwischen ausreichend hoher elektrischer Leitfähigkeit und hoher elektrochemischer Aktivität des Katalysators kann beispielsweise erzielt werden, wenn der Katalysator während seiner Herstellung einer thermischen Behandlung bei einer Temperatur von mehr als 250°C, z.B. >250°C bis 550°C, bevorzugter 300°C bis 450°C, noch bevorzugter 300°C bis 380°C unterzogen wurde. Die thermische Behandlung kann beispielsweise in einer sauerstoffhaltigen Atmosphäre erfolgen. Die thermische Behandlung erfolgt beispielsweise über einen Zeitraum von mindestens einer Stunde, bevorzugt aber nicht mehr als drei Stunden. Durch diese thermische Behandlung (bevorzugt bei 300-450°C, noch bevorzugter bei 300-380°C) kann die elektrische Leitfähigkeit des Katalysators im Vergleich zu einem nicht thermisch behandelten Katalysator deutlich erhöht werden (beispielsweise um das 50- bis 100-fache), während die elektrochemische Aktivität nur moderat reduziert wird (z.B. um das 1,5- bis 2-fache).

Beispielsweise wird der Katalysator während seiner Herstellung keiner thermischen Behandlung bei einer Temperatur von mehr als 360°C über eine Zeitdauer von mehr als 60 Minuten unterzogen.

Bevorzugt weist der partikelförmige Katalysator eine Kern-Schale-Struktur auf, in der das Trägermaterial den Kern und die iridiumhaltige Beschichtung die Schale bilden. Bevorzugt ist der Kern vollständig von der Schale umschlossen.

Gemäß eines dritten Aspekts der vorliegenden Erfindung wird die Aufgabe gelöst durch einen partikelförmigen Katalysator, enthaltend

- ein Trägermaterial, das eine BET-Oberfläche im Bereich von 2 m$^2$/g bis <10 m$^2$/g, bevorzugter 2 m$^2$/g bis 9 m$^2$/g aufweist,
- eine auf dem Trägermaterial vorliegende iridiumhaltige Beschichtung, die ein Iridiumoxid, ein Iridiumhydroxid oder ein Iridiumhydroxidoxid oder ein Gemisch aus mindestens zwei dieser Iridiumverbindungen enthält,

wobei der Katalysator einen Iridiumgehalt von 5 Gew% bis 20 Gew%, bevorzugter 5 Gew% bis 14 Gew% aufweist.

Hinsichtlich geeigneter Trägermaterialien kann auf die obigen Ausführungen verwiesen werden. Beispielsweise ist das Trägermaterial ein Oxid eines Übergangsmetalls (beispielsweise ein Titanoxid (z.B. TiO$_2$), ein Zirkonoxid (z.B. ZrO$_2$), ein Nioboxid (z.B. Nb$_2$O$_5$), ein Tantaloxid (z.B. Ta$_2$O$_5$) oder ein Ceroxid), ein Oxid eines Hauptgruppenmetalls (z.B. ein Aluminiumoxid wie Al$_2$O$_3$), SiO$_2$ oder ein Gemisch aus zwei oder mehr der vorstehend genannten Trägermaterialien. In einer bevorzugten Ausführungsform ist das Trägermaterial ein Titanoxid. Bei dem Trägermaterial handelt es sich üblicherweise um ein partikelförmiges Trägermaterial.

Auch hinsichtlich bevorzugter Eigenschaften der iridiumhaltigen Beschichtung kann auf die obigen Ausführungen verwiesen werden. Bevorzugt enthält die iridiumhaltige Beschichtung ein Iridiumhydroxidoxid. Ein Iridiumhydroxidoxid enthält neben Oxid-Anionen auch noch Hydroxid-Anionen und lässt sich beispielsweise durch folgende Formel wiedergeben: IrO(OH)x; $1 \leq x < 2$. Beispielsweise liegt in der iridiumhaltigen Beschichtung ein atomares Verhältnis von Iridium(IV) zu Iridium (III), bestimmt über Röntgenphotoelektronenspektroskopie (XPS), von maximal 4,7/1,0 vor. Beispielsweise liegt das atomare Iridium(IV)/Iridium(III)-Verhältnis in der iridiumhaltigen Schicht im Bereich von 1,0/1,0 bis 4,7/1,0. Dies kann zu einer weiteren Verbesserung der elektrochemischen Aktivität des Katalysators führen. Um einen vorteilhaften Kompromiss zwischen hoher elektrochemischer Aktivität und hoher elektrischer Leitfähigkeit zu realisieren, kann es bevorzugt sein, dass das atomare Iridium(IV)/Iridium(III)-Verhältnis in der iridiumhaltigen Schicht im Bereich von 1,9/1,0 bis 4,7/1,0, bevorzugter 2,5/1,0 bis 4,7/1,0 liegt. Das atomare Iridium(IV)/Iridium(III)-Verhältnis kann über die Temperatur einer thermischen Behandlung des Katalysators eingestellt werden.

Auch für den Katalysator gemäß des dritten Aspekts der vorliegenden Erfindung kann ein vorteilhafter Kompromiss zwischen ausreichend hoher elektrischer Leitfähigkeit und hoher elektrochemischer Aktivität des Katalysators beispielsweise erzielt werden, wenn der Katalysator während seiner Herstellung einer thermischen Behandlung bei einer Temperatur von mehr als 250°C, z.B. >250°C bis 550°C, bevorzugter 300°C bis 450°C, noch bevorzugter 300°C bis 380°C unterzogen wurde.

Auch für den Katalysator gemäß des dritten Aspekts der vorliegenden Erfindung ist bevorzugt, dass er kein metallisches Edelmetall (wie z.B. Platin, Palladium, Iridium, Rhodium, Ruthenium, Osmium, Silber oder Gold) enthält. Mit metallischem Edelmetall ist ein Edelmetall der Oxidationsstufe 0 gemeint. Die Abwesenheit metallischer Edelmetalle kann durch XPS verifiziert werden.

Weiterhin betrifft die vorliegende Erfindung ein Verfahren zur Herstellung des oben beschriebenen partikelförmigen Katalysators, wobei auf einem Trägermaterial eine iridiumhaltige Beschichtung, die ein Iridiumoxid, ein Iridiumhydroxid oder ein Iridiumhydroxidoxid enthält, abgeschieden wird.

Die Abscheidung der iridiumhaltigen Beschichtung auf dem Trägermaterial erfolgt beispielsweise über ein nasschemisches Verfahren, bei dem unter alkalischen Bedingungen und optional durch eine thermische Nachbehandlung ein Iridiumoxid, Iridiumhydroxid oder Iridiumhydroxidoxid auf einem partikelförmigen Trägermaterial aufgebracht wird.

Alternativ ist es auch möglich, die iridiumhaltige Beschichtung über eine Spraypyrolyse auf dem Trägermaterial abzuscheiden.

Beispielsweise erfolgt die Herstellung des Katalysators durch ein Verfahren, in dem

- in einem wässrigen Medium, das eine Iridiumverbindung enthält, bei einem pH-Wert $\geq 9$ ein Iridium-haltiger Feststoff auf einem Trägermaterial abgeschieden wird,
- das mit dem Iridium-haltigen Feststoff beladene Trägermaterial aus dem wässrigen Medium abgetrennt und optional einer thermischen Behandlung unterzogen wird.

Das zu beschichtende Trägermaterial liegt beispielsweise dispergiert in dem wässrigen Medium vor. Das wässrige Medium enthält eine Iridiumverbindung, die sich unter alkalischen Bedingungen als Iridium-haltiger Feststoff ausfällen lässt. Solche Iridiumverbindungen sind dem Fachmann bekannt. Bevorzugt handelt es sich um eine Iridium(IV)- oder eine Iridium(III)-Verbindung.

Wie oben bereits erwähnt, kann die Schichtdicke durch die Menge an Iridiumoxid, Iridiumhydroxid oder Iridiumhydroxidoxid, die auf dem Trägermaterial abgeschieden wird, und die BET-Oberfläche des Trägermaterials eingestellt werden. Je höher die BET-Oberfläche des Trägermaterials bei einer bestimmten Menge an aufgebrachtem Iridiumoxid, Iridiumhydroxid oder Iridiumhydroxidoxid ist, desto geringer wird die Schichtdicke der iridiumhaltigen Beschichtung.

Hinsichtlich der BET-Oberfläche des Trägermaterials kann auf die oben gemachten Ausführungen verwiesen werden. Bevorzugt beträgt die BET-Oberfläche des Trägermaterials 2 m$^2$/g bis 40 m$^2$/g, bevorzugter 2 m$^2$/g bis <10 m$^2$/g, noch bevorzugter 2 m$^2$/g bis 9 m$^2$/g.

Geeignete Iridium(III)- oder Iridium(IV)-Verbindungen, die unter alkalischen Bedingungen in wässriger Lösung als Feststoff ausfallen, sind dem Fachmann bekannt. Beispielsweise ist die Iridium(III)- oder Iridium(IV)-Verbindung ein Salz (z.B. ein Iridiumhalogenid wie IrCl$_3$ oder IrCl$_4$; ein Salz, dessen Anion ein Chloro-Komplex IRCl$_6^{2-}$ ist; ein Iridiumnitrat oder ein Iridiumacetat) oder eine Iridium-haltige Säure wie z.B. H$_2$IrCl$_6$. In einer bevorzugten Ausführungsform enthält das wässrige Medium ein Iridium(IV)-halogenid, insbesondere Ir(IV)-chlorid.

Optional kann in dem wässrigen Medium auch noch eine Ruthenium(III)- und/oder Ruthenium(IV)-Verbindung vorliegen. Dies ermöglicht die Abscheidung eines Iridium-Ruthenium-Hydroxidoxids auf dem Trägermaterial. Sofern eine Ruthenium-Precursorverbindung im wässrigen Medium vorliegt, kann es sich beispielsweise um ein Ru(III)- oder Ru(IV)-Salz handeln, z.B. ein Halogenid-, Nitrat- oder Acetat-Salz.

Bevorzugt weist das wässrige Medium für die Abscheidung des Iridium-haltigen Feststoffs auf dem Trägermaterial einen pH-Wert $\geq 10$, noch bevorzugter $\geq 11$ auf. Beispielsweise weist das wässrige Medium einen pH-Wert von 9-14, bevorzugter 10-14 oder 11-14 auf.

Das wässrige Medium enthält üblicherweise Wasser in einem Anteil von mindestens 50 Vol%, bevorzugter mindestens 70 Vol% oder sogar mindestens 90 Vol%.

Für die Abscheidung des Iridium-haltigen Feststoffs auf dem Trägermaterial beträgt die Temperatur des wässrigen Mediums beispielsweise 40°C bis 100°C, bevorzugter 60°C bis 80°C.

Das Trägermaterial kann beispielsweise in einem wässrigen Medium, das bereits eine oder mehrere Iridium(III)- und/oder Iridium(IV)-Verbindungen enthält, jedoch einen pH-Wert < 9 aufweist, dispergiert werden (z.B. bei Raumtemperatur). Anschließend wird der pH-Wert des wässrigen Mediums durch Zugabe einer Base auf einen Wert $\geq 9$ erhöht und optional wird auch die Temperatur des wässrigen Mediums erhöht, bis sich über eine Ausfällungsreaktion ein Iridium-haltiger Feststoff auf dem Trägermaterial abscheidet. Alternativ ist es beispielsweise auch möglich, das Trägermaterial in einem wässrigen Medium, das noch keine Iridiumverbindungen enthält, zu dispergieren und erst nach der Einstellung eines geeigneten pH-Werts und optional einer bestimmten Fällungstemperatur eine Iridium(III)- und/oder Iridium(IV)-Verbindung dem wässrigen Medium zuzugeben.

Sofern in dem wässrigen Medium auch noch eine Ruthenium(III)- und/oder Ruthenium(IV)-Verbindung vorlag, enthält der durch die Fällung auf das Trägermaterial aufgebrachte Feststoff neben Iridium noch Ruthenium. Das atomare Verhältnis von Iridium zu Ruthenium kann beispielsweise im Bereich von 90/10 bis 10/90 liegen.

Die Abtrennung des mit dem Iridium-haltigen Feststoff beladenen Trägermaterials aus dem wässrigen Medium erfolgt über Methoden, die dem Fachmann bekannt sind (z.B. durch Filtration).

Das mit dem Iridium-haltigen Feststoff beladene Trägermaterial wird getrocknet. Der getrocknete Iridium-haltige Feststoff, der auf dem Trägermaterial vorliegt, ist beispielsweise ein Iridiumhydroxidoxid. Ein Iridiumhydroxidoxid enthält neben Oxid-Anionen auch noch Hydroxid-Anionen und lässt sich beispielsweise durch folgende Formel wiedergeben:

IrO(OH)x; 1 ≤ x < 2.

Durch die Temperatur und die Dauer einer thermischen Behandlung kann geregelt werden, ob in der auf dem Trägermaterial vorliegenden Beschichtung ein Iridiumoxid, ein Iridiumhydroxid oder ein Iridiumhydroxidoxid vorliegt. Hohe Temperaturen und eine lange Dauer der thermischen Behandlung begünstigen die Bildung eines Iridiumoxids.

Wie oben bereits erläutert, kann es für die elektrochemische Aktivität des Katalysators vorteilhaft sein, wenn eine längere thermische Behandlung bei hoher Temperatur während der Herstellung des Katalysators vermieden wird. Erfolgt also die Trocknung des beladenen Trägermaterials bei moderater Temperatur und wird auf eine anschließende Kalzinierung des Materials bei hoher Temperatur verzichtet oder zumindest die Zeitdauer der thermischen Behandlung bei höherer Temperatur relativ kurz gehalten, so zeigt dieses Material eine hohe katalytische Aktivität bei der Sauerstoffentwicklungsreaktion unter sauren Bedingungen.

Beispielsweise wird das beschichtete Trägermaterial in dem Verfahren keiner thermischen Behandlung bei einer Temperatur von mehr als 250°C über eine Zeitdauer von mehr als 1 Stunde unterzogen. Beispielsweise wird das beschichtete Trägermaterial in dem Verfahren keiner thermischen Behandlung bei einer Temperatur von mehr als 200°C über eine Zeitdauer von mehr als 30 Minuten unterzogen.

Beispielsweise wird das beschichtete Trägermaterial bei einer Temperatur von maximal 250°C, bevorzugter maximal 200°C getrocknet und nach dem Trocknen keiner weiteren thermischen Behandlung unterzogen.

Wie ebenfalls oben bereits erläutert, kann die elektrische Leitfähigkeit der auf dem Trägermaterial vorliegenden iridiumhaltigen Beschichtung und damit des Katalysators verbessert werden, wenn eine thermische Nachbehandlung bei etwas höherer Temperatur erfolgt. Ein vorteilhafter Kompromiss zwischen ausreichend hoher elektrischer Leitfähigkeit und hoher elektrochemischer Aktivität des Katalysators kann beispielsweise erzielt werden, wenn das beschichtete Trägermaterial einer thermischen Behandlung bei einer Temperatur von mehr als 250°C, z.B. >250°C bis 550°C, bevorzugter 300°C bis 450°C, noch bevorzugter 300°C bis 380°C unterzogen wird. Die thermische Behandlung kann beispielsweise in einer sauerstoffhaltigen Atmosphäre erfolgen. Die thermische Behandlung erfolgt beispielsweise über einen Zeitraum von mindestens einer Stunde, bevorzugt jedoch nicht mehr als drei Stunden.

Weiterhin betrifft die vorliegende Erfindung einen partikelförmigen Katalysator, der nach dem oben beschriebenen Verfahren erhältlich ist.

Weiterhin betrifft die vorliegende Erfindung eine Zusammensetzung, enthaltend

- den oben beschriebenen Katalysator und
- ein Ionomer, insbesondere ein Sulfonsäuregruppen-haltiges Ionomer (z.B. ein Sulfonsäuregruppen-haltiges fluoriertes Ionomer).

Geeignete Ionomere sind dem Fachmann bekannt. Beispielsweise ist das Sulfonsäuregruppenhaltige fluorierte Ionomer ein Copolymer, das als Monomere ein Fluorethylen (z.B. Tetrafluorethylen) und einen Sulfonsäuregruppe-haltigen Fluorvinylether (z.B. einen Sulfonsäuregruppe-haltigen Perfluorvinylether) enthält. Eine Übersicht zu diesen Ionomeren findet sich z.B. in folgender Publikation: A. Kusoglu und A.Z. Weber in Chem. Rev., 2017, 117, S. 987-1104.

Die Zusammensetzung ist beispielsweise eine Tinte, die neben dem Katalysator und dem Ionomer noch ein flüssiges Medium enthält. Das flüssige Medium enthält beispielsweise einen oder mehrere kurzkettige Alkohole (z.B. Methanol, Ethanol oder n-Propanol oder ein Gemisch aus mindestens zwei dieser Alkohole). Der Katalysator liegt in der Tinte beispielsweise in einer Konzentration von 5-60 Gew%, bevorzugter 10-50 Gew% oder 20-40 Gew% vor. Das Ionomer liegt in der Tinte beispielsweise in einer Konzentration von 5-50 Gew%, bevorzugter 10-30 Gew% vor.

Die Zusammensetzung kann auch als Feststoff vorliegen. Beispielsweise enthält die Anode einer Wasserelektrolysezelle diese Zusammensetzung.

Weiterhin betrifft die vorliegende Erfindung die Verwendung des oben beschriebenen Katalysators oder der oben beschriebenen Zusammensetzung als Anode für die Wasserelektrolyse. An der Anode findet die Sauerstoffentwicklungsreaktion statt. Bevorzugt ist die Wasserelektrolyse eine PEM-Wasserelektrolyse, d.h. die Sauerstoffentwicklungsreaktion erfolgt bevorzugt unter sauren Bedingungen.

Messmethoden

Folgende Messmethoden wurden im Rahmen der vorliegenden Erfindung verwendet:

Durchschnittliche Dicke der iridiumhaltigen Beschichtung auf dem Trägermaterial

Die durchschnittliche Dicke der iridiumhaltigen Beschichtung auf dem Trägermaterial wurde durch TEM (Transmissionselektronenmikroskopie) bestimmt. Die durchschnittliche Dicke ergibt sich aus dem arithmetischen Mittelwert der an mindestens zehn verschiedenen Stellen auf mindestens zwei TEM-Aufnahmen bestimmten Schichtdicken der iridiumhaltigen Beschichtung.

Es wurden wenige $\mu$g des zu untersuchenden Materials in Ethanol supsendiert. Anschließend wurde ein Tropfen der Suspension auf ein Kohle-Lochfilm-beschichtetes Cu-Plättchen (Plano, 200 mesh) pipettiert und getrocknet. Die Schichtdickenmessungen wurden bei einer Vergrößerung von 500.000x gemacht. Durch eine parallele EDX-Elementanalyse von einem im Trägermaterial vorliegenden Element (z.B. Ti) und von Ir ist auf der TEM-Aufnahme ersichtlich, welche Bereiche auf den Trägermaterialpartikeln iridiumhaltig sind.

Es wurde auf mindestens zwei TEM-Aufnahmen jeweils an mindestens 5 Stellen der TEM-Aufnahme die Dicke der iridiumhaltigen Beschichtung bestimmt. Jede TEM-Aufnahme zeigt mehrere Partikel. Der arithmetische Mittelwert dieser Schichtdicken ergab die durchschnittliche Dicke der iridiumhaltigen Beschichtung.

Die relative Standardabweichung StAbw$_{rel}$ (in %), manchmal auch als Variationskoeffizient bezeichnet, von der durchschnittlichen Schichtdicke ergibt sich in bekannter Weise aus folgender Beziehung:

$$StAbw_{rel} = [StAbw / MW] \times 100$$

wobei

MW die durchschnittliche Schichtdicke, in nm, ist und
StAbw die Standardabweichung, in nm, von der durchschnittlichen Schichtdicke ist.

Die (absolute) Standardabweichung, in nm, ergibt sich in bekannter Weise über die Quadratwurzel der Varianz.

Iridiumgehalt des Katalysators

Der Iridiumgehalt und, sofern anwesend, der Gehalt an Ruthenium werden über optische Emissionsspektrometrie mit induktiv gekoppeltem Plasma (ICP-OES) bestimmt.

BET-Oberfläche

Die BET-Oberfläche wurde mit Stickstoff als Adsorbat bei 77 K gemäß der BET-Theorie bestimmt (Mehrpunkt-Methode, ISO 9277:2010).

Atomares Verhältnis von Ir(IV) zu Ir(111)

Die relativen Anteile der Ir-Atome der Oxidationsstufe +4 und der Oxidationsstufe +3 und damit das atomare Ir(IV)/Ir(III)-Verhältnis in dem geträgerten Iridiumhydroxidoxid wurden durch Röntgenphotoelektronenspektroskopie (XPS) bestimmt. Die Bestimmung dieses Verhältnisses wird im Detailspektrum des Ir(4f) Dubletts (BE 75 - 55 eV, Al-k$\alpha$ Quelle) durch einen modifizierten, asymmetrischen Lorentz-Peakfit mit Shirley Background durchgeführt. Darüber hinaus wird das Vorhandensein einer IrOH-Spezies im O(1s) Detailspektrum (BE ca. 531 eV, Al-k$\alpha$ Quelle) mittels eines asymmetrischen Peakfits (Shirley Background, Gaus-Lorentz Mischung mit 30% Gauss-Anteil) nachgewiesen. Eine entsprechende Vorgehensweise wird z.B. in Abbott et al., Chem. Mater, 2016, 6591-6604, beschrieben.

Über XPS-Analyse kann auch geprüft werden, ob Iridium(0) in der Zusammensetzung vorliegt.

Anhand der nachfolgenden Beispiele wird die Erfindung eingehender erläutert.

**Beispiele**

Erfindungsgemäßes Beispiel EB1

27,80 g Iridium(IV)-chlorid (IrCl$_4$ Hydrat, Heraeus Deutschland GmbH & Co. KG) wurden in 4000 mL Wasser bei Raumtemperatur gelöst. Anschließend wurden 29,94 g TiO$_2$ (DT20, Tronox, BET-Oberfläche: 20 m$^2$/g) hinzugefügt. Durch Zugabe von NaOH wurde der pH auf 10,3 eingestellt. Das wässrige Medium wurde auf 70°C erwärmt und der pH wurde auf 11 eingestellt. Es wurde über Nacht bei 70°C gerührt. Der pH wurde auf > 11,0 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Der Katalysator weist eine Kern-Schale-Struktur auf. Die XPS-Analyse zeigte, dass die auf dem Trägermaterial vorliegende iridiumhaltige Beschichtung ein Iridiumhydroxidoxid enthält. Ir(IV)/Ir(III)-Verhältnis: 4,0:1,0.

Erfindungsgemäßes Beispiel EB2

64,59 g Iridium(IV)-chlorid (IrCl$_4$ Hydrat, Heraeus Deutschland GmbH & Co. KG) wurden in 2500 mL Wasser bei Raumtemperatur gelöst. Anschließend wurden 53,15 g TiO$_2$ (DT30, Tronox, BET-Oberfläche: 30 m$^2$/g) hinzugefügt. Durch Zugabe von NaOH wurde der pH auf 9,0 eingestellt. Das wässrige Medium wurde auf 70°C erwärmt und der pH wurde auf 9,2 eingestellt. Es wurde über Nacht bei 70°C gerührt. Der pH wurde auf > 9,0 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Der Katalysator weist eine Kern-Schale-Struktur auf. Die XPS-Analyse zeigte, dass die auf dem Trägermaterial vorliegende iridiumhaltige Beschichtung ein Iridiumhydroxidoxid enthält. Ir(IV)/Ir(III)-Verhältnis: 3,9:1,0.

Erfindungsgemäßes Beispiel EB3

9,23 g Iridium(IV)-chlorid (IrCl$_4$ Hydrat, Heraeus Deutschland GmbH & Co. KG) wurden in 1000 mL Wasser bei Raumtemperatur gelöst. Anschließend wurden 44,85 g TiO$_2$ (DT-X5, Tronox, BET-Oberfläche: 5 m$^2$/g) hinzugefügt. Durch Zugabe von NaOH wurde der pH auf 9,0 eingestellt. Das wässrige Medium wurde auf 70°C erwärmt und der pH wurde auf 9,2 eingestellt. Es wurde über Nacht bei 70°C gerührt. Der pH wurde auf > 9,0 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Der Katalysator weist eine Kern-Schale-Struktur auf. Die XPS-Analyse zeigte, dass die auf dem Trägermaterial vorliegende iridiumhaltige Beschichtung ein Iridiumhydroxidoxid enthält. Ir(IV)/Ir(III)-Verhältnis: 4,6:1,0.

Vergleichsbeispiel VB1

48,35 g Iridium(IV)-chlorid (IrCl$_4$ Hydrat, Heraeus Deutschland GmbH & Co. KG) wurden in 4000 mL Wasser bei Raumtemperatur gelöst. Anschließend wurden 51,9 g TiO$_2$ (Activ G5, Tronox, BET-Oberfläche: 150 m$^2$/g) hinzugefügt. Durch Zugabe von NaOH wurde der pH auf 11,2 eingestellt. Das wässrige Medium wurde auf 70°C erwärmt und der pH wurde auf > 11 eingestellt. Es wurde über Nacht bei 70°C gerührt. Der pH wurde auf > 11 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Auf dem Trägermaterial liegen isolierte iridiumhaltige Inseln vor. Die XPS-Analyse zeigte, dass die vereinzelt auf dem Trägermaterial vorliegenden iridiumhaltigen Inseln ein Iridiumhydroxidoxid enthalten.

Der Iridiumgehalt der Katalysatoren und die durchschnittlichen Schichtdicken der auf dem Trägermaterial vorliegenden iridiumhaltigen Beschichtung sind in der nachfolgenden Tabelle 1 zusammengefasst.

In der Tabelle 2 werden die BET-Oberflächen der Trägermaterialien zusammengefasst. Außerdem wird in der Tabelle 2 für jede der Proben anhand der jeweiligen BET-Oberfläche des Trägermaterials und unter Verwendung der Beziehung

$$(1{,}505 \ (g/m^2) \ x \ BET) \ / \ (1 + 0{,}0176 \ (g/m^2) \ x \ BET) \leq Ir\text{-}G \leq (4{,}012 \ (g/m^2) \ x \ BET) \ / \ (1 + 0{,}0468 \ (g/m^2) \ x \ BET)$$

der anspruchsgemäße Bereich des Iridiumgehalts berechnet. In den erfindungsgemäßen Proben EB1, EB2 und EB3 sind die BET-Oberfläche des Trägermaterials und der Iridiumgehalt des Katalysators so aufeinander abgestimmt, dass die erfindungsgemäße Beziehung erfüllt ist. In dem Vergleichsmaterial VB1 wird ein Iridiumgehalt verwendet, der hinsichtlich der BET-Oberfläche des Trägermaterials zu niedrig ist.

Tabelle 1: Iridiumgehalt der Katalysatoren und durchschnittliche Dicke der Ir-haltigen Beschichtungen

| Probe | Iridiumgehalt des Katalysators [Gew%] | Durchschnittliche Dicke der Ir-haltigen Beschichtung [nm] |
|---|---|---|
| EB1 | 30 | 2,7 |
| EB2 | 35 | 3,0 |
| EB3 | 10 | 2,8 |
| VB1 | 30 | Keine Beschichtung, sondern nur vereinzelte Iridiumhydroxidoxid-Inseln, die auf der Oberfläche des Trägermaterials dispergiert sind. |

In den Proben EB1 bis EB3 beträgt die relative Standardabweichung von der durchschnittlichen Dicke der iridiumhaltigen Beschichtung maximal 20%.

Tabelle 2: BET-Oberfläche der Trägermaterialien und Iridiumgehalt der Katalysatoren

| Probe | BET -Oberfläche des Trägermaterials [m$^2$/g] | Iridiumgehalt des Katalysators [Gew%] | Bereich für den Iridiumgehalt (in Gew%), der sich aus der anspruchsgemäßen Beziehung[1] ergibt. |
|---|---|---|---|
| EB1 | 20 | 30 | 22 - 41 |
| EB2 | 30 | 35 | 30 - 50 |
| EB3 | 5 | 10 | 7 - 16 |
| VB1 | 150 | 30 | 62 - 75 |
| [1] (1,505 (g/m$^2$) x BET) / (1 + 0,0176 (g/m$^2$) x BET) $\leq$ Ir-G $\leq$ (4,012 (g/m$^2$) x BET) / (1 + 0,0468 (g/m$^2$) x BET) | | | |

Herstellung beschichteter Membrane und Bestimmung der Aktivität

Die in den Beispielen EB1, EB2, EB3 und VB1 hergestellten Katalysatormaterialien wurden für die Herstellung beschichteter Membrane verwendet. Hierfür wurden die Katalysatormaterialien der Beispiele EB1, EB2, EB3 und VB1 in einer Tinte dispergiert und zur Ausbildung der Anode auf eine Membran aufgebracht, die ein Sulfonsäuregruppen-haltiges fluoriertes Polymer enthält.

Die Beschichtung wurde durch ein sogenanntes Decal-Transferverfahren von PTFE Transferfolien auf die Polymermembran (Nafion 117, 178 μm, Chemours) realisiert. Die Beschichtung der PTFE-Folie wurde mit einer Mayer-Bar-Beschichtungsmaschine durchgeführt. Aus den getrockneten Schichten wurden 5 cm$^2$ große Decals herausgestanzt und auf die Polymermembran unter Druck (2.5 MPa) und Temperatur (155°C) gepresst. Die Beladung wurde durch Auswaage der PTFEs vor und nach dem Übertragungsvorgang bestimmt.

Für jede der beschichteten Membrane wurde die Zellenspannung als Funktion der Stromdichte bestimmt.

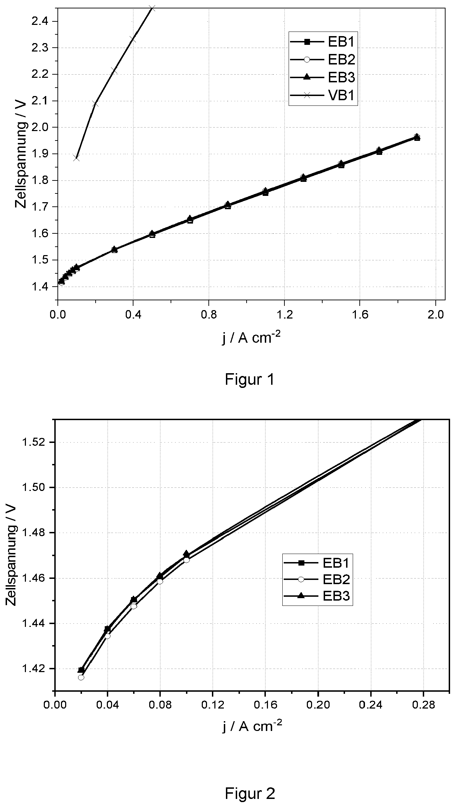

Die Testabläufe bei EB1, EB2, EB3 und VB1 sind identisch und wurden in einem hauseigenen Messaufbau automatisiert durchgeführt. Die Strom-Spanungsführung wurde mit einem Potentiostaten und Booster gesteuert (Autolab PGSTAT302N und Booster 10A der Firma Metrohm). Nach einer Aufwärmphase und einem Konditionierungsschritt wurden galvanostatische Polarisationskurven im Stromdichtebereich von 0,01 - 2,00 A/cm$^2$ bei einer Zelltemperatur von 80°C aufgenommen. Bei jedem Strompunkt wurde eine Zellspannung bestimmt, die ein gemittelter Wert über einem Zeitraum 10 Sekunden nach Einstellen des Gleichgewichts entspricht. Figur 1 zeigt die Messkurven (Zellspannung als Funktion der Stromdichte für EB1, EB2 Eb3 und VB1). Figur 2 zeigt außerdem eine Vergrößerung des relevanten Bereichs für EB1, EB2 und EB3 aus der Figur 1. Parallel wurde der Hochfrequenzwiderstand per Elektrochemischer Impedanz Spektroskopie Messungen an den genannten Strompunkten bestimmt, so dass eine Korrektur des Zellwiderstandes vorgenommen werden konnte (iR-frei). Diese Kurven sind nicht abgebildet.

Die Ergebnisse sind in Tabelle 3 zusammengefasst.

Tabelle 3: Eigenschaften der beschichteten Membrane

| Für die Herstellung der beschichteten Membran verwendete Probe | Iridium-Beladungsgrad der Anode [mg Ir / cm$^2$ Membran] | Aktivität bei 1,50 V [A/g Ir] | Aktivität bei 1,45 V$_{iR-frei}$ [A/g Ir] |
|---|---|---|---|
| EB1 | 0,25 | 764 | 399 |
| EB2 | 0,25 | 764 | 440 |
| EB3 | 0,29 | 641 | 345 |
| VB1 | 0,27 | Keine ausreichend hohe und somit messbare Performance. | Keine ausreichend hohe und somit messbare Performance. |

Die Ergebnisse zeigen, dass sich mit dem erfindungsgemäßen Katalysator eine Anode fertigen lässt, die eine sehr geringe flächenbezogene Iridium-Beladung (weniger als 0,30 mg Iridium pro cm$^2$ beschichteter Membranfläche) aufweist und dennoch eine sehr hohe elektrochemische Aktivität aufweist.

**Patentansprüche**

1.  Ein partikelförmiger Katalysator, enthaltend

    - ein Trägermaterial,
    - eine auf dem Trägermaterial vorliegende iridiumhaltige Beschichtung, die

        - ein Iridiumoxid, ein Iridiumhydroxid oder ein Iridiumhydroxidoxid oder ein Gemisch aus mindestens zwei dieser Iridiumverbindungen enthält und
        - eine durchschnittliche Schichtdicke im Bereich von 1,5 nm bis 5,0 nm aufweist,

    wobei der Katalysator einen Iridiumgehalt von maximal 50 Gew% aufweist.

2.  Ein partikelförmiger Katalysator, enthaltend

    - ein Trägermaterial,
    - eine auf dem Trägermaterial vorliegende iridiumhaltige Beschichtung, die ein Iridiumoxid, ein Iridiumhydroxid oder ein Iridiumhydroxidoxid enthält,

    wobei das Trägermaterial eine BET-Oberfläche im Bereich von 2 m$^2$/g bis 50 m$^2$/g aufweist und der Iridiumgehalt des Katalysators der folgenden Bedingung genügt:

$$(1{,}505\ (g/m^2)\ x\ BET)\ /\ (1 + 0{,}0176\ (g/m^2)\ x\ BET) \leq Ir\text{-}G \leq (4{,}012\ (g/m^2)\ x\ BET)\ /\ (1 + 0{,}0468\ (g/m^2)\ x\ BET)$$

    wobei

        BET die BET-Oberfläche, in m$^2$/g, des Trägermaterials ist und
        Ir-G der Iridiumgehalt, in Gew%, des Katalysators ist.

3.  Der partikelförmige Katalysator nach einem der vorstehenden Ansprüche, wobei der Iridiumgehalt des Katalysators maximal 40 Gew%, bevorzugter maximal 35 Gew% beträgt.

4.  Der partikelförmige Katalysator nach einem der vorstehenden Ansprüche, wobei die BET-Oberfläche des Trägermaterials 2 m$^2$/g bis 40 m$^2$/g, bevorzugter 2 m$^2$/g bis <10 m$^2$/g, noch bevorzugter 2 m$^2$/g bis 9 m$^2$/g beträgt.

5.  Der partikelförmige Katalysator nach einem der vorstehenden Ansprüche, wobei der Iridiumgehalt des Katalysators der folgenden Bedingung genügt:

$$(1{,}705\ (g/m^2)\ x\ BET)\ /\ (1 + 0{,}0199\ (g/m^2)\ x\ BET) \leq Ir\text{-}G \leq (3{,}511\ (g/m^2)\ x\ BET)\ /\ (1 + 0{,}0410\ (g/m^2)\ x\ BET)$$

    wobei

        BET die BET-Oberfläche, in m$^2$/g, des Trägermaterials ist und
        Ir-G der Iridiumgehalt, in Gew%, des Katalysators ist.

6.  Der partikelförmige Katalysator nach einem der vorstehenden Ansprüche, wobei die durchschnittliche Schichtdicke der iridiumhaltigen Beschichtung 1,5 nm bis 4,0 nm, bevorzugter 1,7 nm bis 3,5 nm beträgt.

7.  Der partikelförmige Katalysator nach einem der vorstehenden Ansprüche, wobei die Katalysatorpartikel eine Kern-Schale-Struktur aufweisen, in der das Trägermaterial den Kern und die iridiumhaltige Beschichtung die Schale bilden.

8.  Der partikelförmige Katalysator nach einem der vorstehenden Ansprüche, wobei das Iridium ausschließlich als Iridium in der Oxidationsstufe +3 (Iridium(III)) und/oder als Iridium in der Oxidationsstufe +4 (Iridium(IV)) vorliegt.

9.  Der partikelförmige Katalysator nach einem der vorstehenden Ansprüche, wobei das Trägermaterial ein Oxid eines Übergangsmetalls, ein Oxid eines Hauptgruppenmetalls, $SiO_2$ oder ein Gemisch aus zwei oder mehr der vorstehend genannten Trägermaterialien ist.

10. Der partikelförmige Katalysator nach Anspruch 10, wobei das Trägermaterial ein Titanoxid ist.

11. Der partikelförmige Katalysator nach einem der vorstehenden Ansprüche, wobei der Katalysator einer thermischen Behandlung bei einer Temperatur von mehr als 250°C, bevorzugt >250°C bis 550°C, bevorzugter 300-450°C, noch bevorzugter 300-380°C unterzogen wurde; oder die iridiumhaltige Beschichtung ein atomares Verhältnis von Iridium(IV) zu Iridium (III), bestimmt über Röntgenphotoelektronenspektroskopie (XPS), im Bereich von 1,9/1,0 bis 4,7/1,0 aufweist.

12. Ein Verfahren zur Herstellung des partikelförmigen Katalysators nach einem der Ansprüche 1 bis 11, wobei auf einem Trägermaterial eine iridiumhaltige Beschichtung, die ein Iridiumoxid, ein Iridiumhydroxid oder ein Iridiumhydroxidoxid enthält, abgeschieden wird.

13. Das Verfahren nach Anspruch 12, wobei das beschichtete Trägermaterial einer thermischen Behandlung bei einer Temperatur von mehr als 250°C, bevorzugt >250°C bis 550°C, bevorzugter 300-450°C, noch bevorzugter 300-380°C unterzogen wird.

14. Eine Zusammensetzung, enthaltend

   - den partikelförmigen Katalysator nach einem der Ansprüche 1-11,
   - ein Ionomer, insbesondere ein Sulfonsäuregruppen-haltiges Ionomer.

15. Verwendung des partikelförmigen Katalysators nach einem der Ansprüche 1-11 oder der Zusammensetzung nach Anspruch 14 als Anode für die Wasserelektrolyse.

Figur 1

Figur 2

**Europäisches Patentamt**
**European Patent Office**
**Office européen des brevets**

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 20 21 7035

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| E | EP 3 764 443 A1 (HERAEUS DEUTSCHLAND GMBH & CO KG [DE]) 13. Januar 2021 (2021-01-13) * das ganze Dokument * ----- | 1,3,4, 6-15 | INV. C25B1/04 C25B9/23 C25B11/054 C25B11/067 C25B11/091 |
| X | KARIMI FATEMEH ET AL: "Metal Carbide and Oxide Supports for Iridium-Based Oxygen Evolution Reaction Electrocatalysts for Polymer-Electrolyte-Membrane Water Electrolysis", ELECTROCHIMICA ACTA, ELSEVIER, AMSTERDAM, NL, Bd. 246, 15. Juni 2017 (2017-06-15), Seiten 654-670, XP085155043, ISSN: 0013-4686, DOI: 10.1016/J.ELECTACTA.2017.06.048 | 1,3-9, 11-13,15 | |
| Y | * das ganze Dokument * ----- | 10,14 | |
| Y,D | WO 2005/049199 A1 (UMICORE AG & CO KG [DE]; LOPEZ MARCO [DE] ET AL.) 2. Juni 2005 (2005-06-02) * das ganze Dokument * ----- | 10,14 | |

**RECHERCHIERTE SACHGEBIETE (IPC)**

C25B

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 31. August 2021 | Ritter, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04E09)

Europäisches
Patentamt

European
Patent Office

Office européen
des brevets

**UNVOLLSTÄNDIGE RECHERCHE
ERGÄNZUNGSBLATT C**

Nummer der Anmeldung

EP 20 21 7035

Vollständig recherchierbare Ansprüche:
        1

Unvollständig recherchierte Ansprüche:
        3-15

Nicht recherchierte Ansprüche:
        2

Grund für die Beschränkung der Recherche:

Der Recherchenbericht wurde aus den im begleitenden schriftlichen
Bescheid angegebenen Gründen auf der Grundlage des ersten unabhängigen
Produktanspruchs (Anspruch 1) erstellt.

**ANHANG ZUM EUROPÄISCHEN RECHERCHENBERICHT
ÜBER DIE EUROPÄISCHE PATENTANMELDUNG NR.**

EP 20 21 7035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2021

| Im Recherchenbericht angeführtes Patentdokument | Datum der Veröffentlichung | Mitglied(er) der Patentfamilie | Datum der Veröffentlichung |
|---|---|---|---|
| EP 3764443 A1 | 13-01-2021 | EP 3764443 A1 | 13-01-2021 |
| | | WO 2021004716 A1 | 14-01-2021 |
| WO 2005049199 A1 | 02-06-2005 | AT 442901 T | 15-10-2009 |
| | | CA 2543256 A1 | 02-06-2005 |
| | | CN 1874841 A | 06-12-2006 |
| | | DK 1701790 T3 | 25-01-2010 |
| | | EP 1701790 A1 | 20-09-2006 |
| | | JP 5199575 B2 | 15-05-2013 |
| | | JP 2007514520 A | 07-06-2007 |
| | | KR 20060100404 A | 20-09-2006 |
| | | NO 331842 B1 | 16-04-2012 |
| | | US 2007292744 A1 | 20-12-2007 |
| | | US 2011223523 A1 | 15-09-2011 |
| | | WO 2005049199 A1 | 02-06-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005049199 A1
- EP 2608297 A1
- EP 2608298 A1


**In der Beschreibung aufgeführte Nicht-Patentliteratur**

- **M. CARMO et al.** *International Journal of Hydrogen Energy,* 2013, vol. 38, 4901-4934
- **V. HIMABINDU et al.** *Materials Science for Energy Technologies,* 2019, vol. 2, 442-454
- **P. STRASSER et al.** *Adv. Energy Mater.,* 2017, vol. 7, 1601275
- **F.M. SAPOUNTZI et al.** *Progress in Energy and Combustion Science,* 2017, vol. 58, 1-35
- **M. BERNT et al.** Analysis of Voltage Losses in PEM Water Electrolyzers with Low Platinum Group Metal Loadings. *J. Electrochem. Soc.,* 2018, vol. 165, F305-F314
- **M. BERNT et al.** Current Challenges in Catalyst Development for PEM Water Electrolyzers. *Chem. Ing. Tech.,* 2020, vol. 92 (1-2), 31-39
- **M. BERNT et al.** *J. Electrochem. Soc.,* 2018, vol. 165, F305-F314
- **M. BERNT et al.** *Chem. Ing. Tech.,* 2020, vol. 92 (1-2), 31-39
- **C. VAN PHAM et al.** *Applied Catalysis B: Environmental,* 2020, vol. 269, 118762
- **A. KUSOGLU ; A.Z. WEBER.** *Chem. Rev.,* 2017, vol. 117, 987-1104
- **ABBOTT et al.** *Chem. Mater,* 2016, 6591-6604